# EUROPÄISCHE PATENTSCHRIFT

(11) **EP 1 627 213 B1**
(45) Veröffentlichungstag und Bekanntmachung des Hinweises auf die Patenterteilung: **14.03.2012**
(21) Anmeldenummer: 04738568.7
(22) Anmeldetag: 26.05.2004
(51) Int. Cl.: F16C 19/52, G01L 5/00, G01K 13/08

(54) **WÄLZLAGER MIT POLYMERELEKTRONIK**
ANTIFRICTION BEARING PROVIDED WITH POLYMER ELECTRONICS
PALIER A ROULEMENT COMPORTANT UNE ELECTRONIQUE POLYMERE

(30) Priorität: 27.05.2003 DE 10323889
(43) Veröffentlichungstag der Anmeldung: 22.02.2006
(73) Patentinhaber: Schaeffler Technologies AG & Co. KG, 91074 Herzogenaurach (DE)
(72) Erfinder: EHRFELD, Wolfgang, 55234 Wendelsheim (DE); HERBSTRITT, Frank, 55232 Alzey (DE); HERING, Joachim, 97078 Würzburg (DE)
(86) Internationale Anmeldenummer: PCT/DE2004/001099
(87) Internationale Veröffentlichungsnummer: WO 2004/106878

(56) Entgegenhaltungen:
- DE-A- 4 218 949
- DE-A- 10 061 923
- DE-A- 10 136 438
- US-A- 5 677 488
- HUEBLER A., HAHN U., BEIER W., LASCH N., FISCHER T.: "High volume printing technologies for the production of polymer electronic structures" 2ND INTERNATIONAL IEEE CONFERENCE ON POLYMERS AND ADHESIVES IN MICROELECTRONICS AND PHOTONICS, POLYTRONIC 2002, CONFERENCE PROCEEDINGS, PISCATAWAY, NJ, USA, 23. Juni 2002 (2002-06-23), Seiten 172-176, XP010594252
- CANTATORE E., GELINK G.H., DE LEEUW D.M.: "Polymer electronics: from discrete transistors to integrated circuits and active matrix displays" PROCEEDINGS OF THE 2002 BIPOLAR/BICMOS CIRCUITS AND TECHNOLOGY MEETING. ( BCTM ). MINNEAPOLIS, MN, SEPT. 29 - OCT. 1, 2002, IEEE BIPOLAR/BICMOS CIRCUITS AND TECHNOLOGY MEETING, NEW YORK, NY : IEEE, US, 29. September 2002 (2002-09-29), Seiten 167-172, XP010613134 ISBN: 0-7803-7561-0
- HOFSTRAAT H: "Will polymer electronics change the electronics industry?" FIRST INTERNATIONAL IEEE CONFERENCE ON POLYMERS AND ADHESIVES IN MICROELECTRONICS AND PHOTONICS, INCORPORATING POLY, PEP AND ADHESIVES IN ELECTRONICS, PROCEEDINGS, PISCATAWAY, NJ, USA, 21. Oktober 2001 (2001-10-21), Seiten 1-8, XP010570064
- TAYLOR D.M., MORRIS D.J.: "Engineering challenges for polymer electronics" PROCEEDINGS OF 2001 INTERNATIONAL SYMPOSIUM ON ELECTRICAL INSULATING MATERIAL, 2001 ASIAN CONFERENCE ON ELECTRICAL INSULATING DIAGNOSIS, 33RD SYMPOSIUM ON ELECTRICAL AND ELECTRONIC INSULATING MATERIALS AND APPLICATIONS IN SYSTEMS, TOKYO, JAPAN, 19. November 2001 (2001-11-19), Seiten 537-540, XP010569967
- MCCLUSKEY P., NAGVANSHI M., VERNEKER V.R.P., KONDRACKI P., FINELLO D.: "Nanocomposite materials offer higher conductivity and flexibility" ADHESIVE JOINING AND COATING TECHNOLOGY IN ELECTRONICS MANUFACTURING, 1998. PROCEEDINGS OF 3RD INTERNATIONAL CONFERENCE, BINGHAMTON, NY, USA 28-30 SEPT. 1998, NEW YORK, NY, USA, IEEE, US, 28. September 1998 (1998-09-28), Seiten 282-286, XP010319255 ISBN: 0-7803-4934-2
- GARDNER J.W., BARTLETT P.N.: "Application of conducting polymer technology in microsystems" SENSORS AND ACTUATORS A, ELSEVIER SEQUOIA S.A., LAUSANNE, CH, Bd. 51, Nr. 1, Oktober 1995 (1995-10), Seiten 57-66, XP004303557 ISSN: 0924-4247
- LEE E.H., RAO G.R., MANSUR L.K.: "Super-hard-surfaced Polymers by High-energy Ion-beam Irradiation" TRENDS IN POLYMER SCIENCE, ELSEVIER SCIENCE PUBLISHERS B.V. AMSTERDAM, NL, Bd. 4, Nr. 7, 1. Juli 1996 (1996-07-01), Seiten 229-237, XP004049273 ISSN: 0966-4793

## Beschreibung

### Anwendungsgebiet der Erfindung

Die Erfindung betrifft ein Wälzlager, mit Sensoren zur Erfassung von auf das Lager wirkenden physikalischen Größen sowie mit elektronischen Komponenten zur Auswertung und/oder Übertragung der Sensorausgangssignale oder daraus abgeleiteter Kennwerte an außerhalb des Lagers befindliche elektrische oder elektronische Geräte, wobei die Sensoren, Leiterbahnen und elektronischen Komponenten ein Messdatenerfassungs- und/oder Messdatenverarbeitungssystem bildend auf wenigstens einem Lagerbauteil angeordnet sind. Zudem betrifft die Erfindung ein diesbezügliches Herstellverfahren und eine Herstellungsmaschine nach den Oberbegriffen der Ansprüche 22 beziehungsweise 32.

### Hintergrund der Erfindung

Aus der DE 101 36 438 A1 ist eine Sensoranordnung in einem Wälzlager bekannt, mit der auf das Lager einwirkende physikalische Größen ermittelbar sind. Bei dieser Sensoranordnung werden die auf Lagerschalen des Wälzlagers wirkenden Kräfte und Momente derart erfasst, dass die mechanischen Spannungen oder sonstige physikalische Beeinflussungen der Lagerschalen mit an den Lagerschalen angeordneten Sensorelementen sowie damit gegebenenfalls zusammengefassten Elektronikbauteilen detektiert werden. Die Sensoren sind dabei als Dehnungsmessstreifen ausgebildet, die vorzugsweise in einer Umfangsnut einer feststehenden Lagerschale befestigt sind, wobei letztere sowohl die innere oder die äußere Lagerschale eines Wälzlagers sein kann.

Gemäß dieser Druckschrift kann die Sensoranordnung auf einem als Trägermaterial wirkenden Substrat angeordnet sein. Die zuvor beschriebenen Dehnungsmesswiderstände der Sensoren sind zudem über eine Isolationsschicht auf einem unflexiblen metallischen zwischenträger wie etwa einem Plättchen aufgebracht. Das als Schaltungsträger ausgebildete Trägermaterial kann gemäß dieser Druckschrift an geeigneter Stelle am Wälzlager angeschweißt oder eingepresst sein.

Darüber hinaus ist aus dieser DE 101 36 438 A1 bekannt, dass auf dem metallischen Zwischenträger sowohl axial als auch tangential messende Dehnungsmesswiderstände in Voll-oder Halbbrückenschaltung aufgebracht werden können. Zudem können diese bekannten Brückenschaltungen auch noch mit elektronischen Bausteinen verbunden werden, mit denen eine Signalauswertung und Signalübertragung zu weiteren Messstellen oder anderen Auswerteschaltungen beziehungsweise zu einem Anschlussstecker möglich ist.

Die Signalübertragung bei diesem bekannten Messlager kann dabei seriell über einen Digitalbus oder einen Analogbus erfolgen. Demnach erlaubt diese mechatronische Anordnung die zusätzliche direkte Zuordnung von Bausteinen zur elektronischen Signalverarbeitung zu dem Wälzlager, so dass beispielsweise digitale Ausgangssignale erzeugt werden können und die Sensoranordnung unmittelbar an ein Bussystem etwa in einem Kraftfahrzeug anschließbar ist.

Außerdem ist aus der DE 42 18 949 A ein Kraftmesslager bekannt, bei dem die Sensoren in Form von Kraftmessfolien aufgebaut und in eine Umfangsnut eines Lagerbauteils eingesetzt sind. Diese Foliensensoren bestehen aus zwei zusammenlaminierte Polymerlagen, wobei die eine Lage mit kammartig ineinandergreifenden Elektroden beschichtet und auf der anderen Lage ein Widerstandsmaterial aufgetragen ist. Wird der Sensor mit einer Kraft beaufschlagt, so schließt das Widerstandsmaterial die Elektroden mehr oder weniger parallel, so dass der elektrische Widerstand mit ansteigender Druckbelastung abnimmt. Diese druckabhängige Widerstandsänderung kann dann mit Hilfe einer Auswerteelektronik genau bestimmt werden.

Des Weiteren ist durch die DE10304592. ein gattungsgemäßes Wälzlager mit einem Messdatenerfassungs- und Messdatenverarbeitungssystem bekannt, welches aus Sensoren, Leiterbahnen und Mikrocomputern besteht, die auf wenigstens einer gemeinsamen flexiblen Trägerfolie angeordnet und auf einem Bauteil des Lagers befestigt sind.

Bei diesem Wälzlager sind die Sensoren und elektronischen Bausteine zusammen mit ihrer flexiblen Trägerfolie beispielsweise am feststehenden Lageraußenring und dort vorzugsweise in einer Ringnut an der Außenseite des Lagerringes befestigt.

Hinsichtlich der Sensoren, die in diesem Messdatenerfassungs- und Messdatenverarbeitungssystem auf der flexiblen Trägerfolie integriert sind, ist vorgesehen, dass diese zumindest zur Erfassung der Drehzahl und/oder der Drehrichtung eines im Lager gelagerten Körpers, der auf das Lager wirkenden Radial- und/oder Axialkraft, der Kraftrichtung, des Lagergeräusches, der Lagertemperatur und einer gegebenenfalls auftretenden Unwucht ausgebildet sind.

Die elektronischen Bausteine können gemäß dieses Standes der Technik als einzelne diskrete elektronische Bausteine wie etwa Operationsverstärker, Kondensatoren, Widerstände oder aber auch als komplexe und sehr kleine Mikrocomputer aufgebaut sein, die mit den Sensoren und auch untereinander über Signalübertragungsleitungen auf der flexiblen Trägerfolie verbunden sind. Die Sensoren, die Sensor- und/oder Datenleitungen sowie die elektronischen Bausteine sind beispielsweise mittels eines Dünnfilmschichtverfahrens (PVD-Verfahren) oder mittels einer Besputterungstechnik auf die flexible Trägerfolie aufgetragen und mit einem elastischen und elektrisch nicht leitenden Abdeckmaterial abgedeckt.

US5677 488 und DE 10061923 offenbaren Wälzlager, in denen aus Polymer hergestellte Sensoren auf einem lagerteil hingelegt werden.

Schließlich ist aus der DE 42 31 610 A1 sowie aus den Druckschriften US 2003/59975 A1, US 2003/59984 A1, US 2003/59987 A1 und US 2003/60038 A1 bekannt, ein organisches Material zur Herstellung von elektronischen Strukturen zu nutzen und dieses beispielsweise mittels eines Flüssig-keitsstrahldrucks ("ink-jet printing") auf ein Trägersubstrat aufzutragen.

### Aufgabe der Erfindung

Vor diesem Hintergrund besteht die Aufgabe an die Erfindung darin, ein gattungsgemäßes Messlager vorzustellen, das im Hinblick auf die Herstellung und Anordnung der elektrischen Bauteile und Komponenten kostengünstiger, qualitativ besser und flexibler als bisher herstellbar ist.

### Lösung der Aufgabe

Die Lösung dieser Aufgabe ergibt sich für das Wälzlager aus den Merkmalen des Anspruchs 1, für ein Herstellver-fahren zur Erzeugung eines solchen Messlagers sowie für eine diesbezügliche Herstellmaschine aus den Merkmalen des Anspruchs 21 beziehungsweise 30. Vorteilhafte Ausgestaltungen und weiterbildungen der Erfindung sind den abhängigen Ansprüchen entnehmbar.

Demnach ist das Wälzlager mit Sensoren zur Erfassung von auf das Lager wirkenden physikalischen Größen sowie mit elektronischen Komponenten zur Auswertung und/oder Übertragung der Sensorausgangssignale oder daraus abgeleiteter Kennwerte an außerhalb des Lagers befindliche elektrische oder elektronische Geräte ausgestattet, wobei die Sensoren, Leiterbahnen und elektronischen Komponenten ein Messdatenerfassungs- und/oder Messdatenverarbeitungssystem bildend auf wenigstens einem Lagerbauteil angeordnet sind. Von besonderer Bedeutung hinsichtlich der Erfindung ist nun, dass die Sensoren, Leiterbahnen und/oder elektronischen Komponenten aus wenigstens einem lateral strukturieren elektrisch leitenden oder halbleitenden organischem Material oder einem Vorläufer davon aufgebaut sind.

In der Erfindung ist vorgesehen, dass das elektrisch leitende oder halbleitende organische Material oder dessen Vorläufer durch Druck-und/oder Beschichtungstechniken aus einer flüssigen oder festen Phase des organischen Materials auf dem wenigstens einen Lagerbauteil aufgedruckt ist.

Durch diesen Aufbau ist ein solches Messlager sehr schnell, kostengünstig sowie hinsichtlich der Produktvariabilität und der Messgenauigkeit sehr vorteilhaft herstellbar. Dies ist darauf zurückzuführen, dass die Sensoren, Leiterbahnen und/oder sonstigen elektronischen Komponenten aus wenigstens einem elektrisch leitenden oder halbleitenden organischem Material mittels Druck-, Flüssig- und/oder Festphasenbeschichtungsverfahren unmittelbar auf die gegebenenfalls auch gekrümmte Oberfläche des oder der betroffenen Lagerbauteile aufbringbar sind, ohne dass dazu aufwendige und teure Vakuum- oder Trägergasherstellprozesse und/oder der Einsatz zusätzlicher Klebstoffe oder sonstiger Befestigungsmittel notwenig wären.

Neben dieser vereinfachten Herstellbarkeit verbessert der direkte Kontakt zwischen den Sensoren und den Lagerbauteilen gegenüber einer aufgeklebten Lagersensorik zudem die Messgenauigkeit.

Zur Herstellung von Signalübertragungsleitungen, elektrischen Spulen und elektrischen Widerständen wird bevorzugt intrinsisch elektrisch leitendes oder halbleitendes organisches Material genutzt, wie etwa dotiertes Polyacetylen, Polyphenylenvinylen, Polyanilin oder Polyethylendioxythiophen.

Bei diesen Polymeren muss es sich nicht zwangsläufig um lösliche Polymere handeln. So werden viele intrinsisch leitfähige Polymere nicht aus einer Lösung sondern aus einer kolloidalen Dispersion abgeschieden. Zudem ist die Abscheidung geeigneter Materialien aus einer gelösten oder dispergierten Vorläuferphase (Precursor) des genannten organischen Druckmaterials denkbar, die durch eine Nachbehandlung, z.B. durch Erhitzen oder UV-Bestrahlung, in eine halbleitende oder leitende Polymerphase überführt wird und im Endzustand nicht mehr zwangsläufig löslich sein muss.

Außerdem besteht die Möglichkeit, die elektrisch leitenden oder halbleitenden Strukturen mittels eines Thermotransferverfahrens von einem Zwischenträger auf das Trägersubstrat der Elektronik zu übertragen.

Eine andere Herstellvariante wird darin gesehen, die leitenden beziehungsweise halbleitenden Strukturen auf das Lagerbauteil mittels des sogenannten "Laser Induced Thermal Imaging"- Verfahrens (beschrieben in: US 5,521,035; US 6,114,088; US 6,242,140 und US 6,194,119) aufzutragen. In diesem Fall wird das Material im festen Zustand von einer Trägerfolie lateral strukturiert auf das Lagerbauteil übertragen.

In einer anderen Ausgestaltung der Erfindung können die Signalübertragungsleitungen, elektrischen Spulen und elektrischen Widerstände auch aus extrinsisch elektrisch leitenden oder halbleitenden organischen Material gebildet sein, zu denen beispielsweise graphit- oder metallgefüllte Polymerpasten gehören.

Feldeffekttransistoren und/oder Dioden sind in einer Weiterbildung des erfindungsgemäßen Messlagers hinsichtlich ihrer Halbleiterstrukturen beispielsweise aus Poly(3-alkylthiophen), α,ω-Dihexylsexithiophen, Alkyl-Naphthalinbisimid und/oder Flouralkyl-Naphthalinbisimid gebildet, während ein Dielektrikum für solche Elektronikbausteine aus Poly(methylmethacrylat), Poly(vinylphenol) oder Polyimid gebildet sein kann.

Hinsichtlich der in das Messlager integrierten Sensoren (insbesondere Kraft- und/oder Dehnungssensoren) wird es als vorteilhaft angesehen, wenn diese als piezoresistiv oder piezoelektrisch wirksame Sensoren ausgebildet sind. Für den Aufbau piezoelektrischer Sensoren können vorteilhaft Komponenten aus Polyvinylidenfluorid oder aus Copolymeren von Vinylidenflourid mit Trifluorethylen eingesetzt werden.

In einer anderen Variante können die piezoelektrisch wirksamen Sensoren oder Komponenten auch aus Kompositen aus anorganischen Mikrokristalliten in polymeren Schichten bestehen, wobei als piezoelektrisch wirksame Komponente Bleizirkonattitanat oder BaTiO₃ in dem Polymer enthalten sein kann.

Elektrische Kondensatoren werden bei dem erfindungsgemäß aufgebauten Messlager beispielsweise aus intrinsisch oder extrinsisch leitenden Polymerpasten sowie polymeren Dielektrika aufgebaut sein.

Bei einem solchen Mess-Wälzlager sind in Ausgestaltung der Erfindung die Sensoren, Leiterbahnen und elektronischen Komponenten in der Regel am Lagerinnenring oder am Lageraußenring angeordnet. Die Sensoren und elektronischen Komponenten werden dort bevorzugt in eine Vertiefung wie etwa eine Ringnut an der Außenseite oder Innenseite eines feststehenden Lagerinnenringes platziert.

Ein erfindungsgemäß aufgebautes Messlager umfasst vorzugsweise Sensoren zur Erfassung der Drehzahl und/oder der Drehrichtung eines im Lager gelagerten Körpers, der auf das Lager wirkenden Radial- und Axialkraft, der Kraftrichtung, des Lagergeräusches beziehungsweise der dort messbaren Vibrationen, der Lagertemperatur und einer gegebenenfalls auftretenden Unwucht.

Darüber hinaus kann das Messlager so aufgebaut sein, dass die elektronischen Komponenten aus wenigstes einem elektrisch leitenden oder halbleitenden organischen Material zumindest einen Mikrocomputer umfassen und/oder bilden, die mit anderen elektronischen Bausteinen und/oder mit den Sensoren über Signalübertragungsleitungen verbunden sind, welche sich vorzugsweise auf dem gleichen Lagerbauteil befinden.

Sofern dies für die Erfassung und Verarbeitung sehr großer Sensordatenmengen und/oder für die Vorverarbeitung dieser Daten notwenig ist, können auch mehrere Mikrocomputer auf dem einen oder auch auf einem weiteren Lagerbauteil angeordnet sein. Diese Mikrocomputer sind dann zum Austausch digitaler oder analoger Daten beziehungsweise Signale untereinander über Datenleitungen vorzugsweise aus einem elektrisch leitenden oder halbleitenden organischen Material verbunden.

Zur Weiterleitung der von den Sensoren und/oder elektronischen Komponenten erfassten oder gebildeten Werte verfügen diese über wenigstens eine Anschlussstelle zur Weiterleitung von Messsignalen, Rohdaten und/oder aufbereiteten Informationen über den aktuellen physikalischen Zustand des Lagers und/oder des mit dem Lager verbundenen Bauteils an wenigstens eine außerhalb des Lagers befindlichen gesonderte Anzeige-, Datenspeicher- und/oder Datenverarbeitungseinrichtung.

In einer anderen bevorzugten Ausführungsform des erfindungsgemäß ausgebildeten Messlagers sind die Sensoren, die Sensor- und Datenleitungen sowie die elektronischen Komponenten beziehungsweise die Mikrocomputer in einem gemeinsamen Herstellprozess auf das oder die Lagerbauteile aufgetragen worden, so dass diese vorzugsweise ein geschlossenes Flächengebilde aus dem oder den elektrisch leitenden und/oder halbleitenden organischen Materialien bilden.

In Ausgestaltung der Erfindung sind die Sensoren, die Sensor- und Datenleitungen sowie die elektronischen Komponenten beziehungsweise die Mikrocomputer zum Schutz vor äußeren Einflüssen mit einem flexiblen und elektrisch nicht leitfähigen Abdeckmaterial beschichtet, welches ebenfalls aus einem elektrisch isolierenden Material besteht.

Eine andere Variante der Erfindung sieht vor, dass auf dem wenigstens einen Lagerbauteil eine logische elektronische Schaltung bestehend aus Halbleiterstrukturen in konventioneller Halbleitertechnik aufgebracht ist, während weitere zu dieser Schaltung gehörende elektronische Strukturen, bestehend aus wenigstens einem elektrisch leitenden oder halbleitenden organischen Material, vorzugsweise auf das Lagerbauteil aufgedruckt sind.

Zum Aufbau einer sehr komplexen Mess- und Auswertungseinrichtung können die Sensoren, Sensor- und Datenleitungen sowie die elektronischen Komponenten beziehungsweise die Mikrocomputer in unterschiedlichen Ebenen unter Zwischenlage einer Isolationsschicht auf einem der genannten Lagerbauteile angeordnet sein. Zur elektrisch leitenden Verbindung zwischen den in unterschiedlichen Ebenen angeordneten Leiterbahnen und/oder elektronischen Komponenten sind in Ausgestaltung der Erfindung im wesentlichen senkrecht zur Längserstreckung der Leiterbahnen ausgerichtete (Durch-) Kontakte aus elektrisch leitendem oder halbleitendem organischem Material durch die vorgenannte Isolationsschicht geführt.

Darüber hinaus wird es als sinnvoll angesehen, wenn zur Vermeidung einer elektrischen Kontaktierung zwischen der Oberfläche des wenigstens einen Lagerbauteils und den Leiterbahnen, elektronischen Komponenten, Mikrocomputern und/oder Sensoren eine isolierende Schicht ausgebildet ist, die aus einem geeigneten organischen oder anorganischen (z. B. oxidischen) Material besteht.

Schließlich kann das Messlager auch über eine optisch wirksame und aus einem elektrisch leitenden oder halbleitenden organischen Material hergestellte Sendevorrichtung verfügen, die zur Übertragung von Sensorsignalen und/oder daraus abgeleiteten Größen von einem Lagerbauteil zu einem außerhalb des Lagers befindlichem Bauteil geeignet und vorgesehen ist. In einer anderen Variante ist jedoch auch eine drahtlose Übertragung mittels höherfrequenter Funkwellen möglich.

Das erfindungsgemäße Herstellverfahren zur Erzeugung eines Wälzlagers mit Sensoren zur Erfassung von auf das Lager wirkenden physikalischen Größen sowie mit elektronischen Komponenten zur Auswertung und/oder Übertragung der Sensorausgangssignale oder daraus abgeleiteter Kennwerte an außerhalb des Lagers befindliche elektrische oder elektronische Geräte, bei dem die Sensoren, Leiterbahnen und elektronischen Komponenten ein Messdatenerfassungs- und/oder Messdatenverarbeitungssystem bildend auf wenigstens einem Lagerbauteil angeordnet sind, ist nun dadurch gekennzeichnet, dass die Sensoren, Leiterbahnen und elektronischen Komponenten aus wenigstens einem elektrisch leitenden oder halbleitenden organischen Material oder dessen Vorläufer auf der Oberfläche von wenigstens einem Bauteil des Wälzlagers aufgebaut werden.

Diese Verfahrensweise hat gegenüber den bekannten Techniken den großen Vorteil, dass die Sensoren und (ganz allgemein definiert) Elektronikstrukturen sehr leicht und schnell auf jeder beliebigen Bauteilstruktur ausgebildet werden können, ohne dass hierfür beispielsweise Vakuumtechniken notwenig wären. Dies reduziert nicht nur die Herstellkosten für ein solches Messlager, im Vordergrund steht vielmehr, dass die Sensor- und Elektronikstrukturen auch auf stark gekrümmten oder strukturierten Bauteiloberflächen problemlos und platzsparend angeordnet beziehungsweise aufgebaut werden können.

Hinsichtlich des Aufbringens der elektrisch leitenden oder halbleitenden organischen Materialien auf die Oberfläche von wenigstens einem der Lagerbauteile werden Drucktechniken bevorzugt. So können die Sensoren, Leiterbahnen und elektronischen Komponenten schichtweise, etwa mittels Siebdruck, Flexodruck oder indirekten Tiefdruck auf der Lagerbauteiloberfläche aufgebaut werden.

In einer anderen Variante werden vergleichbare Ergebnisse aber auch dadurch erzielt, dass die Sensor- und Elektronikstrukturen durch ein Flüssigkeitsstrahldruckverfahren (auch als "Tintenstrahldruck" bekannt) mittels einer Flüssigkeit und einem darin gelösten oder dispergierten elektrisch leitenden oder halbleitenden organischen Material auf die Oberfläche des wenigstens einen Lagerbauteils aufgedruckt werden.

Zudem ist es möglich, dass die Sensoren, Leiterbahnen und elektronischen Komponenten mittels einer Kombination von Siebdruck und Flüssigkeitsstrahldruck auf die Oberfläche des wenigstens einen Lagerbauteils ausgebildet werden.

Des weiteren wird vorgeschlagen, dass die Sensoren, Leiterbahnen und elektronischen Komponenten durch flächigen Auftrag des elektrisch leitenden oder halbleitenden organischen Materials oder dessen Vorläufers in gelöster oder dispergierter Form auf die Lagerbauteile und anschließende laterale Strukturierung mittels Direktlithographie oder Laserablation erzeugt werden.

Zudem sind die Sensoren, Leiterbahnen und/oder elektronische Komponenten mittels eines Thermotransferdruckverfahrens von einem Zwischenträger auf das Trägersubstrat der Elektronik oder direkt auf ein Lagerbauteil übertragbar.

Eine andere Weiterbildung des erfindungsgemäßen Verfahrens sieht vor, dass die Sensoren, Leiterbahnen und/oder elektronischen Komponenten auf das Lagerbauteil mittels des sogenannten "Laser Induced Thermal Imaging"- Verfahrens aufgebaut werden, bei dem das organische Material auf einer Trägerfolie aufgetragen und im festen Zustand von dieser lateral strukturiert auf das Lagerbauteil übertragen wird.

Sofern das die Sensoren, Leiterbahnen und elektronischen Komponenten tragende Lagerbauteil aus einem elektrisch leitenden Material besteht, wird vor dem Aufbau der Polymerelektronik vorzugsweise eine isolierende Schicht aus einem geeigneten, beispielsweise anorganischem Material zwischen diesem Bauteil und der Polymerelektronik aufgebracht, die eine ausreichende Isolationswirkung erzeugt.

In einer weiteren Ausgestaltung des erfindungsgemäßen Herstellverfahrens ist vorgesehen, dass auf wenigstens ein Lagerbauteil eine logische elektronische Schaltung bestehend aus Halbleiterstrukturen in konventioneller Halbleitertechnik (z.B. auf der Basis von Silizium) aufgebracht wird, und dass anschließend die zu dieser Schaltung gehörenden elektronischen Strukturen, bestehend aus wenigstens einem elektrisch leitenden oder halbleitenden organischen Material, auf das Lagerbauteil vorzugsweise aufgedruckt werden. Durch einen solchen Kombinationsaufbau lassen sich die vorteilhaften Eigenschaften sowohl der konventionellen Halbleitertechnik als auch der Polymerelektronik nutzen.

Eine andere Variante des erfinderischen Herstellverfahrens sieht vor, dass die elektronische Schaltung und/oder einzelne Sensoren aus elektrisch leitendem oder halbleitendem organischem Material zuerst auf eine flexible Folie gedruckt, anschließend vereinzelt und abschließend in einer vorgegebenen Konfiguration auf dem wenigstens einem Lagerbauteil befestigt sowie elektrisch miteinander verbunden werden.

Schließlich kann verfahrensgemäß vorgesehen sein, dass die Sensoren, Leiterbahnen und/oder elektronische Komponenten, die nicht in einer Ebene angeordnet und durch einen Isolator voneinander getrennt sind, durch ein elektrisch leitendes oder halbleitendes organisches Material elektrisch miteinander verbunden werden, wobei dieses elektrisch leitende oder halbleitende organische Material im wesentlichen senkrecht zur Längserstreckung der Leiterbahnen beziehungsweise der elektronischen Komponenten ausgerichtet wird.

Die Erfindung betrifft auch eine Fertigungsmaschine zur Herstellung von Sensoren, Leiterbahnen und/oder Elektronikkomponenten aus wenigstens einem elektrisch leitenden oder halbleitenden organischen Material (Polymerelektronik) auf einem Wälzlager, mit einer Einspannvorrichtung für dasjenige Wälzlagerteil, auf das die Polymerelektronik aufgebracht werden soll, mit wenigstens einer Zuführvorrichtung für die Zuführung des organischen Druckmaterials oder einer Vorstufe desselben, und mit wenigstens einer mit der Zuführvorrichtung verbundenen Druckeinrichtung, die ein schichtweises Auftragen des Druckmaterials beziehungsweise dessen Vorstufe auf das Wälzlagerteil ermöglicht.

Sofern es sich bei dem Druckmaterial um ein in einer Lösung gelöstes oder ein in eine Flüssigkeit dispergiertees elektrisch leitendes oder halbleitendes organisches Druckmaterial handelt, ist die zuführvorrichtung für das Druckmaterial als Flüssigkeitsleitung ausgebildet, durch die das organische Druckmaterial zu der Druckeinrichtung transportierbar ist.

Bei der letztgenannten Ausgestaltung der Fertigungsmaschine ist die Flüssigkeitsdruckeinrichtung in einer Ausführungsform als Sieb-, Flexo- oder Tiefdruckvorrichtung ausgebildet, während bei einem an sich bevorzugtem Aufbau die Flüssigkeitsdruckeinrichtung als Flüssigkeitsstrahldruckkopf ausgebildet ist, an dem die wenigstens eine Leitung zur Zuleitung von elektrisch leitendem oder halbleitendem organischem Material befestigt ist.

Die Betätigung eines solchen Flüssigkeitsstrahldruckkopfes erfolgt vorzugsweise mit wenigstens einem piezoelektrischen Aktuator.

Sofern die Fertigungsmaschine zur Ausbildung der Polymerelektronik auf dem Lagerbauteil durch ein Tiefdruck- oder Flexodruckverfahren genutzt wird, kann auf eine vorgenannte Flüssigkeitsleitung verzichtet werden. Statt dessen sind an der Fertigungsmaschine dann geeignete Zuführvorrichtungen für die Tiefdruck- oder Flexodruckmittel vorgesehen.

### Kurze Beschreibung der Zeichnungen

Die Erfindung lässt sich anhand von konkreten Ausführungsbeispielen sowie mit Hilfe der beigefügten Zeichnungen erläutern. Darin zeigen
- Fig. 1: ein Wälzlager sowie daran erfassbare physikalische Größen,
- Fig. 2: einen Querschnitt durch das Wälzlager gemäß Fig. 1, und
- Fig. 3: ein erfindungsgemäß ausgebildetes Messwälzlager mit optischer Datenübertragungseinrichtung.

### Ausführliche Beschreibung der Zeichnungen

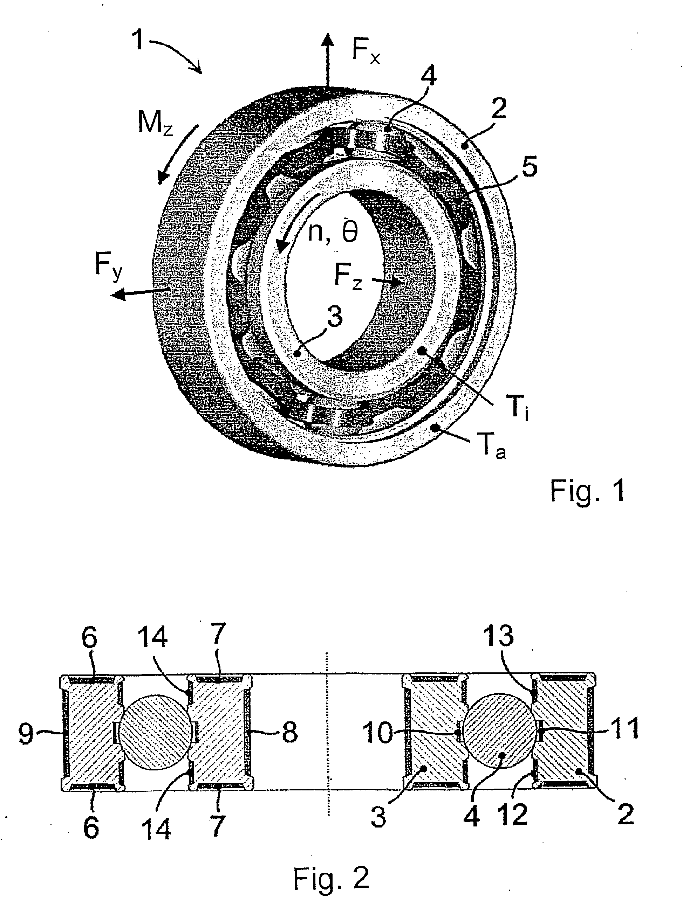

In Figur 1 ist demnach in perspektivischer Ansicht ein typisches Wälzlager 1 dargestellt, zu dem ein drehfest angeordneter Außenring 2 und ein darin drehbar gelagerter Innenring 3 gehört. Zwischen dem Außenring 2 und dem Innenring 3 sind als Kugeln ausgebildete Wälzkörper 4 angeordnet, die in einen Kugelkäfig 5 eingefasst sind.

Eine in dem Innenring 3 gelagerte, hier aber nicht dargestellte Last, übt auf das Wälzlager 1 Kräfte Fₓ, F_{y}, F_{z} in allen drei Raumkoordinaten aus, die mittels der in der Beschreibung des Standes der Technik erwähnten Sensoren messbar sind. Zudem ist hier dargestellt, dass u.a. auch die Drehzahl n sowie der Drehwinkel θ des Innenringes 3, die Temperatur Tᵢ, Tₐ von Innenring 3 und Außenring 2 sowie das axiale Drehmoment M_{z} mittels geeigneter Sensoren feststellbar sind.

Wie dem in Fig. 2 dargestellten Querschnitt durch das Wälzlager gemäß Fig. 1 entnehmbar ist, können die Sensoren zur Messung der vorgenannten oder auch anderer physikalischer Größen an unterschiedlichen Stellen im Wälzlager 1 angeordnet sein. Ihre Befestigungsposition hängt in einigen Fällen von dem gewählten Messverfahren und/oder den physikalisch/technischen Randbedingungen des Lagers sowie dessen Einbausituation beispielsweise in eine Maschine oder ein Fahrzeug ab.

Entsprechend dem erfindungsgemäßen Herstellverfahren lassen sich die Sensoren sowie die Elektronikstrukturen wie beispielsweise Leiterbahnen, Verstärker, Widerstände, Kondensatoren sowie auch ganze Mikrocomputer direkt an den unterschiedlichtsten Positionen sowohl am Lageraußenring als auch am Lagerinnenring ausbilden. Wie Fig. 2 verdeutlicht, können derartige Sensoren sowie Polymerelektronikstrukturen 6, 7, 8, 9, 10, 11, 12, 13, 14 sowohl in Axialnuten als auch in Radialnuten von Innenring 2 und Außenring 3 eingebracht sein. Es ist aber auch möglich, dass die Sensoren und Polymerelektronikstrukturen 6, 7, 8, 9, 10, 11, 12, 13, 14 auch auf nicht durch Nuten geschützte Bereiche von Lagerbauteilen aufgebracht sind, wobei als Anbringungsort durchaus auch stärker strukturierte Bereiche genutzt werden können.

Von besonderem Vorteil bei dem erfindungsgemäßen Herstellverfahren ist, dass die Sensoren sowie die Polymerelektronikstrukturen aus wenigstens einem elektrisch leitenden oder halbleitenden organischen Material auf der Oberfläche von wenigstens einem Bauteil des Wälzlagers aufgebaut werden.

Dieser Aufbauprozess erfolgt vorzugsweise durch ein Druckverfahren, wie ein Siebdruck- oder Flüssigkeitsstrahl-Druckverfahren, bei denen das in einer Flüssigkeit gelöste oder dispergierte elektrisch leitende oder halbleitende organische Material oder eines Vorläufer desselben direkt auf die Oberfläche des Lagerbauteils aufgedruckt wird. Zudem kann der Aufbau der Polymerelektronikstrukturen wie bereits erwähnt auch mittels eines indirekten Tiefdruck- oder Flexodruckverfahrens erfolgen.

Sofern das Lagerbauteil aus einem elektrisch leitenden organischem Material besteht, empfiehlt sich unabhängig von dem Druckverfahren jedoch die Zwischenlage einer Isolationsschicht.

Im Gegensatz beispielsweise zur Besputterungstechnik können nach diesem Verfahren auch auf den gekrümmten radialen Oberflächen von Lagerringen sehr vorteilhaft die gewünschten Sensoren und Elektronikstrukturen ausgebildet werden. Insbesondere müssen die Lagerbauteile dazu nicht wie bei der Besputterungstechnik üblich in ein Vakuum verbracht werden. Zudem können mit dem erwähnten Flüssigkeitsstrahl-Druckverfahren analog zu den bekannten Farbdruckköpfen von Computer-Druckern gleichzeitig unterschiedliche gelöste oder dispergierte elektrisch leitende oder halbleitende organische Materialen auf das Bauteil gespritzt werden, so dass die polymeren Elektronikstrukturen sehr rationell herstellbar sind.

Darüber hinaus kann eine mit einem solchen Flüssigkeitsdruckkopf ausgerüstete Fertigungsmaschine gesteuert von einem Fertigungscomputer und darin abgespeicherten Elektronik-Bauplänen mit hoher Flexibilität unterschiedliche Lagertypen mit derselben oder einer anderen Polymerelektronik bedrucken.

Weitere Vorteile sind darin zu sehen, dass eine solche Polymerelektronik aufgrund geringer Rohstoffkosten sowie deren Umweltverträglichkeit auf eine hohe Akzeptanz stoßen wird.

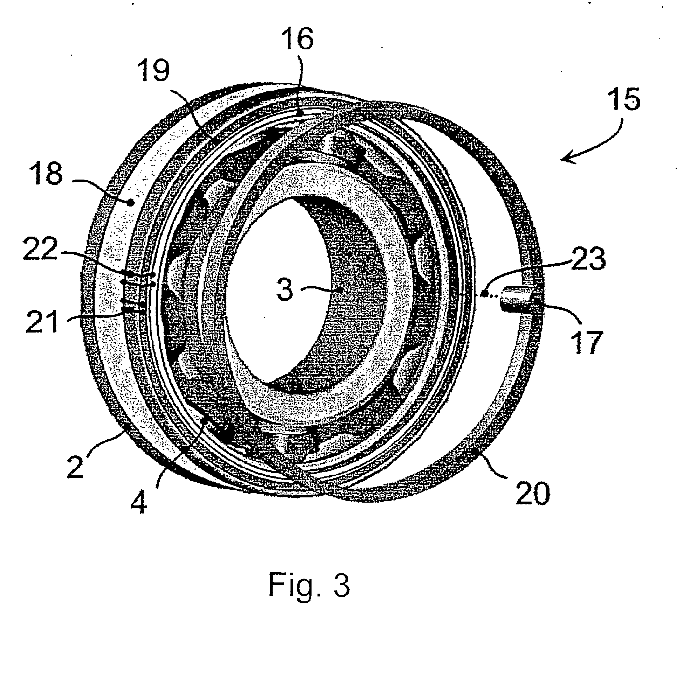

Bei dem in Fig. 3 dargestellten erfindungsgemäß ausgebildeten Messwälzlager 15 sind die Sensoren und die anderen Elektronikstrukturen im Sinne einer integralen Polymerelektronik 18 in eine Radialnut an der Außenseite eines drehbar am Lagerinnenring 3 gelagerten Lageraußenrings 2 durch eines der genannten Druckverfahren eingebracht. Der Aufbau dieser Polymerelektronik 18 erfolgte dabei schichtweise, wie aus der konventionellen Halbleitertechnik bekannt, bei dem durch Schichtfolgen von organischen Materialien mit unterschiedlichen elektrischen Eigenschaften alle benötigten Sensor- und/oder Elektronikbauteile, wie Widerstände, Kondensatoren, Verstärker und sogar ganze Mikrocomputer erzeugbar sind.

Wie Fig. 3 zudem entnehmbar ist, werden die von der Polymerelektronik 18 im drehenden System erzeugten beziehungsweise verarbeiteten Informationen über Sensor-und/oder Datenleitungen 22 an eine optisch wirksame Sendevorrichtung (organische Leuchtdiode) 16 weitergeleitet, die hier ringförmig und aus einem elektrisch leitenden oder halbleitenden organischen Material gebildet ist.

Diese optisch wirksame Sendevorrichtung 16 sendet über eine Leuchtstrecke 23 den von der Polymerelektronik 18 erzeugten Datenstrom an eine Empfangsphotodiode 17, die an einem feststehenden Lagerbauteil (hier nicht dargestellt) oder in der hier gezeigten sehr kompakten Bauform an einer feststehenden elektrischen-Erregerspule 20 angeordnet ist. Nicht ausgeschlossen wird jedoch die Übertragung mittels einer konventionellen Funkeinrichtung im höherfrequenten Bereich.

Mittels der Erregerspule 20 ist ein elektrischer Strom zur Versorgung der Polymerelektronik 18 induktiv in eine Sekundärspule 19 an dem Lageraußenring 2 einkoppelbar, und vor dort über Energieversorgungsleitungen 21 an die Elektronikkomponenten weiterleitbar.

Von besonders großer Bedeutung hinsichtlich der beschriebenen Erfindung ist die Anwendung von Drucktechniken zur Erzeugung eines Messlagers. Die dabei anwendbaren Drucktechniken wie die Flüssigkeitsdrucktechniken Siebdruck, "Tintenstrahldruck", Flexodruck und indirekter Tiefdruck sowie die flächigen Flüssigkeitsphasenbeschichtungstechniken mit anschließender lateraler Strukturierung, wie etwa die Direktlithograpgie oder die Laserablation, sind hierzu besonders vorteilhaft geeignet.

### Bezugszeichenliste

- 1: Wälzlager
- 2: Außenring
- 3: Innenring
- 4: Wälzkörper
- 5: Kugelkäfig
- 6: Sensoren; Polymerelektronik
- 7: Sensoren; Polymerelektronik
- 8: Sensoren; Polymerelektronik
- 9: Sensoren; Polymerelektronik
- 10: Sensoren; Polymerelektronik
- 11: Sensoren; Polymerelektronik
- 12: Sensoren; Polymerelektronik
- 13: Sensoren; Polymerelektronik
- 14: Sensoren; Polymerelektronik
- 15: Wälzlager
- 16: Organische Leuchtdiode
- 17: Feststehende Photodiode
- 18: Polymerelektronik
- 19: Sekundärspule
- 20: Erregerspule; feststehendes Bauteil
- 21: Energieversorgungsleitung
- 22: Datenleitung
- 23: Leuchtstrecke
- Fₓ: Lagerkraft in x-Richtung
- Fy: Lagerkraft in y-Richtung
- F_{z}: Lagerkraft in z-Richtung
- M_{z}: Axiales Drehmoment
- Tᵢ: Außenringtemperatur
- Tₐ: Innenringtemperatur

## Patentansprüche

1. Wälzlager (1, 15), mit Sensoren zur Erfassung von auf das Lager wirkenden physikalischen Größen sowie mit elektronischen Komponenten zur Auswertung und/oder Übertragung der Sensorausgangssignale oder daraus abgeleiteter Kennwerte an außerhalb des Lagers befindliche elektrische oder elektronische Geräte, und mit Leiterbahnen,
wobei die Sensoren, Leiterbahnen und elektronischen Komponenten ein Messdatenerfassungs- und/oder Messdatenverarbeitungssystem bildend auf wenigstens einem Lagerbauteil (2) angeordnet sind,
**dadurch gekennzeichnet,**
- **dass** die Sensoren, Leiterbahnen und/oder elektronischen Komponenten (18) in einer schichtweise aufgebauten Polymerelektronikstruktur erzeugt sind, wobei die Sensoren, Leiterbahnen und / oder elektronischen Komponenten (18) aus wenigstens einem elektrisch leitenden oder halbleitenden organischen Material oder einem Vorläufer davon aufgebaut sind, und
- das elektrisch leitende oder halbleitende organische Material oder ein Vorläufer davon durch Druck- und/oder Beschichtungstechniken aus einer flüssigen oder festen Phase auf dem wenigstens einen Lagerbauteil aufgebracht ist.

2. Wälzlager nach Anspruch 1, **dadurch gekennzeichnet, dass** die Leiterbahnen, elektrischen Spulen und elektrischen Widerstände aus intrinsisch leitfähigen elektrisch leitenden oder halbleitenden organischen Material wie dotiertes Polyacetylen, Polyphenylenvinylen, Polyanilin oder lyethylendioxythiophen bestehen.

3. Wälzlager nach Anspruch 1 oder Anspruch 2, **dadurch gekennzeichnet, dass** die Leiterbahnen, elektrischen Spulen und elektrischen Widerstände aus extrinsisch leitfähigen elektrisch leitenden oder halbleitenden organischen Material wie graphit- oder metallgefüllte Polymerpasten gebildet sind.

4. Wälzlager nach Anspruch 1 oder Anspruch 2, **dadurch gekennzeichnet, dass** Feldeffekttransistoren und/oder Dioden hinsichtlich ihrer Halbleiterstrukturen aus Poly(3-alkyl-thiophen), α,ω-Dihexylsexithiophen, Alkyl-Naphthalinbisimid und Flouralkyl-Naphthalinbisimid bestehen, während ein Dielektrikum aus Poly(methylmethacrylat), Poly(vinylphenol) oder Polyimid gebildet sind.

5. Wälzlager nach Anspruch 1 oder Anspruch 2, **dadurch gekennzeichnet, dass** die piezoelektrisch oder piezoresistiv wirksamen Sensoren oder Komponenten aus Polyvinylidenfluorid oder aus Copolymeren von Vinylidenflourid mit Trifluorethylen gebildet sind.

6. Wälzlager nach Anspruch 1 oder Anspruch 2, **dadurch gekennzeichnet, dass** piezoelektrisch wirksame Sensoren oder ebensolche elektronischen Komponenten aus Kompositen aus anorganischen Mikrokristalliten in polymeren Schichten bestehen, wobei als piezoelektrische Komponente Bleizirkonat-titanat oder BaTiO₃ in dem Polymer enthalten sind.

7. Wälzlager nach Anspruch 1 oder Anspruch 2, **dadurch gekennzeichnet, dass** Kondensatoren aus intrinsisch oder extrinsisch leitenden Polymerpasten sowie polymeren Dielektrika bestehen.

8. Wälzlager nach wenigstens einem der vorherigen Ansprüche, **dadurch gekennzeichnet, dass** die Sensoren, Leiterbahnen und elektronischen Komponenten (18) am Lagerinnenring (3) und/oder am Lageraußenring (2) angeordnet sind.

9. Wälzlager nach wenigstens einem der vorherigen Ansprüche, **dadurch gekennzeichnet, dass** die Sensoren, Leiterbahnen und elektronischen Komponenten (18) in Vertiefungen des Lagerinnenrings (3) und/oder des Lageraußenrings (2) angeordnet sind.

10. Wälzlager nach wenigstens einem der vorherigen Ansprüche, **dadurch gekennzeichnet, dass** die Sensoren zur Erfassung der Drehzahl und/oder der Drehrichtung eines im Lager gelagerten Körpers, der auf das Lager wirkenden Radial- und Axialkraft, der Kraftrichtung, des Lagergeräusches, der Lagertemperatur und einer gegebenenfalls auftretenden Unwucht ausgebildet sind.

11. Wälzlager nach wenigstens einem der vorherigen Ansprüche, **dadurch gekennzeichnet, dass** die elektronischen Komponenten (18) wenigstens einen Mikrocomputer umfassen oder bilden, die mit anderen elektronischen Bausteinen und/oder mit den Sensoren über Signalübertragungsleitungen verbunden sind, die auf dem Lagerbauteil (2) angeordnet sind.

12. Wälzlager nach wenigstens einem der vorherigen Ansprüche, **dadurch gekennzeichnet, dass** mehrere Mikrocomputer auf dem Lagerbauteil (2) angeordnet und untereinander mit Datenleitungen aus einem elektrisch leitenden oder halbleitenden organischen Material verbunden sind, über die ein analoger oder digitaler Datenaustausch erfolgen kann.

13. Wälzlager nach wenigstens einem der vorherigen Ansprüche, **dadurch gekennzeichnet, dass** wenigstens einer der Sensoren oder elektronischen Komponenten (18) über eine Anschlussstelle verfügt, über die die Sensoren und/oder elektronischen Komponenten zur Weiterleitung von Rohdaten und/oder aufbereiteten Informationen über den aktuellen physikalischen Zustand des Lagers und/oder des mit dem Lager verbundenen Bauteils mit wenigstens einer außerhalb des Lagers befindlichen gensonderte Anzeige-, Datenspeicher- und/oder Datenverarbeitungseinrichtung verbindbar sind.

14. Wälzlager nach wenigstens einem der vorherigen Ansprüche, **dadurch gekennzeichnet, dass** die Sensoren, die Sensor- und Datenleitungen sowie die elektronischen Komponenten beziehungsweise die Mikrocomputer in einem gemeinsamen Herstellverfahren auf das oder die Lagerbauteile aufgetragen worden sind.

15. Wälzlager nach wenigstens einem der vorherigen Ansprüche, **dadurch gekennzeichnet, dass** die Sensoren, die Sensor- und Datenleitungen sowie die elektronischen Komponenten beziehungsweise die Mikrocomputer mit einem flexiblen und elektrisch nicht leitfähigen Abdeckmaterial beschichtet sind.

16. Wälzlager nach wenigstens einem der vorherigen Ansprüche, **dadurch gekennzeichnet, dass** auf dem wenigstens einen Lagerbauteil eine logische elektronische Schaltung bestehend aus Halbleiterstrukturen in konventioneller Halbleitertechnik aufgebracht ist, während die weiteren zu dieser Schaltung gehörenden Strukturen aus wenigstens einem elektrisch leitenden oder halbleitenden organischen Material auf das Lagerbauteil aufgedruckt sind.

17. Wälzlager nach wenigstens einem der vorherigen Ansprüche, **dadurch gekennzeichnet, dass** elektrisch leitende Verbindungen zwischen in unterschiedlichen Schichten angeordneten Leiterbahnen und/oder elektronischen Komponenten, welche leitenden Verbindungen im wesentlichen senkrecht zur Längserstreckung der Leiterbahnen ausgerichtet sind, durch ein elektrisch leitendes oder halbleitendes organisches Material gebildet sind.

18. Wälzlager nach wenigstens einem der vorherigen Ansprüche, **dadurch gekennzeichnet, dass** zwischen der Oberfläche des wenigstens einen Lagerbauteils und den Leiterbahnen, elektronischen Komponenten und/oder Sensoren eine isolierende Schicht aus einem geeigneten elektrisch isolierendem, vorzugsweise anorganischem Material ausgebildet ist.

19. Wälzlager nach wenigstens einem der vorherigen Ansprüche, **dadurch gekennzeichnet, dass** dieses eine optisch wirksame Sendevorrichtung (15, 16) aufweist, die aus einem elektrisch leitenden oder halbleitenden organischen Material gebildet ist und zur Übertragung von Sensorsignalen und/oder daraus abgeleiteten Größen von einem Lagerbauteil zu einem außerhalb dieses Lagers befindlichen Bauteil geeignet und vorgesehen ist.

20. Wälzlager nach wenigstens einem der vorherigen Ansprüche, **dadurch gekennzeichnet, dass** die Energieversorgung der elektronischen Komponenten (18) im Wälzlager (15) induktiv mittels einer außerhalb des Lagers befindliche Erregerspule (20) und einer am Lager befestigten Sekundärspule (19) erfolgt.

21. Verfahren zur Herstellung eines Wälzlagers nach einem der Ansprüche 1 bis 20 mit Sensoren zur Erfassung von auf das Lager wirkenden physikalischen Größen sowie mit elektronischen Komponenten zur Auswertung und/oder Übertragung der Sensorausgangssignale oder daraus abgeleiteter Kennwerte an außerhalb des Lagers befindliche elektrische oder elektronische Geräte,
wobei die Sensoren, Leiterbahnen und elektronischen Komponenten ein Messdatenerfassungs- und/oder Messdatenverarbeitungssystem bildend auf wenigstens einem Lagerbauteil angeordnet sind,
**dadurch gekennzeichnet,**
- **dass** die Sensoren, Leiterbahnen und/oder elektronischen Komponenten aus wenigstens einem elektrisch leitenden oder halbleitenden organischen Material oder einem Vorläufer desselben auf der Oberfläche von wenigstens einem Bauteil des Wälzlagers aufgebaut werden und
- das elektrisch leitende oder halbleitende organische Material oder dessen Vorläufer auf die Oberfläche von wenigstens einem Bauteil des Wälzlagers aufgedruckt wird

22. Verfahren nach dem vorherigen Verfahrensanspruch,
**dadurch gekennzeichnet, dass** die Sensoren, Leiterbahnen und elektronischen Komponenten mittels Siebdruck, indirektem Tiefdruck, Flexodruck oder Flüssigkeitsstrahldruck aus einer Flüssigkeit und einem darin gelösten oder dispergierten elektrisch leitenden oder halbleitenden organischen Material oder dessen Vorläufer auf die Oberfläche des wenigstens einen Lagerbauteils schichtweise aufgebaut werden.

23. Verfahren nach wenigstens einem der vorherigen Verfahrensansprüche 21-22
**dadurch gekennzeichnet, dass** die Sensoren, Leiterbahnen und elektronischen Komponenten durch flächigen Auftrag des elektrisch leitenden oder halbleitenden organischen Materials oder dessen Vorläufers in gelöster oder dispergierter Form auf die Lagerbauteile und anschließende schichtweisen Strukturierung des flächigen Auftrags mittels Direktlithographie oder Laserablation erzeugt werden.

24. Verfahren nach wenigstens einem der vorherigen Verfahrensansprüche 21-23
**dadurch gekennzeichnet, dass** die Sensoren, Leiterbahnen und/oder elektronische Komponenten mittels eines Thermotransferdruckverfahrens von einem Zwischenträger auf das Trägersubstrat der Elektronik oder direkt auf ein Lagerbauteil übertragen werden.

25. Verfahren nach wenigstens einem der vorherigen Verfahrensansprüche 21-24 **dadurch gekennzeichnet, dass** die Sensoren, Leiterbahnen und/oder elektronischen Komponenten auf das Lagerbauteil mittels des so genannten "Laser Induced Thermal Imaging"- Verfahrens aufgebaut werden, bei dem das organische Material auf einer Trägerfolie aufgetragen und im festen Zustand von dieser Trägerfolie in einer eine Elektronikstruktur aufweisenden Schicht auf das Lagerbauteil übertragen wird, wobei die schichtweise aufgebaute Elektronikstruktur erzeugt wird.

26. Verfahren nach wenigstens einem der vorherigen Verfahrensansprüche 21-25 **dadurch gekennzeichnet, dass** vor dem Ausbilden beziehungsweise Auftragen der Sensoren, Leiterbahnen und/oder elektronischen Komponenten auf der Oberfläche des wenigstens einen Lagerbauteils eine isolierende Schicht aus einem organischen oder vorzugsweise anorganischen Material aufgebracht wird.

27. Verfahren nach wenigstens einem der vorherigen Verfahrensansprüche 21-26
**dadurch gekennzeichnet, dass** auf das wenigstens eine Lagerbauteil eine logische elektronische Schaltung bestehend aus Halbleiterstrukturen in konventioneller Halbleitertechnik aufgebracht wird, während die weiteren zu dieser Schaltung gehörenden elektronischen Strukturen aus einem elektrisch leitenden oder halbleitenden organischen Material auf das Lagerbauteil aufgedruckt werden.

28. Verfahren nach wenigstens einem der vorherigen Verfahrensansprüche 21-27
**dadurch gekennzeichnet, dass** die elektronische Schaltung und/oder einzelne Sensoren aus elektrisch leitenden oder halbleitenden organischen Material beziehungsweise dessen Vorläufer zuerst auf eine flexible Folie aufgetragen, anschließend vereinzelt und abschließend in einer vorgegebenen Konfiguration auf dem wenigstens einem Lagerbauteil befestigt sowie elektrisch miteinander verbunden werden.

29. Verfahren nach wenigstens einem der vorherigen Verfahrensansprüche 21-28, **dadurch gekennzeichnet, dass** die Sensoren, Leiterbahnen und/oder elektronische Komponenten, die unter Zwischenlage eines Isolators in mehr als einer Schicht angeordnet sind, durch ein elektrisch leitendes oder halbleitendes organisches Material elektrisch miteinander verbunden werden, wobei dieses elektrisch leitende oder halbleitende organische Material im wesentlichen senkrecht zur Längserstreckung der Leiterbahnen beziehungsweise der elektronischen Komponenten ausgerichtet wird.

30. Fertigungsmaschine zur Ausbildung von Sensoren, Leiterbahnen und/oder Elektronikkomponenten aus wenigstens einem elektrisch leitenden oder halbleitenden organischen Material auf einem Wälzlager, zur Durchführung des Verfahrens nach einem der Ansprüche 21 bis 29, **gekennzeichnet durch**,
eine Einspannvorrichtung zur Aufnahme desjenigen Wälzlagerbauteils (2), auf der die Polymerelektronik (18) aufgebracht werden soll, wenigstens eine Zuführvorrichtung für die Zuführung von wenigstens einem elektrisch leitenden oder halbleitenden organischen Material oder einem Vorläufer davon, und wenigstens eine mit der Zuführvorrichtung für die Zuführung des organischen Materials verbundene Druckvorrichtung, die ein schichtweises Auftragen des wenigstens einen organischen Materials oder einem Vorläufer davon auf das Wälzlagerbauteil (2) ermöglicht.

31. Fertigungsmaschine nach Anspruch 30, **dadurch gekennzeichnet, dass** bei Verwendung eines in einer Flüssigkeit gelöstes oder dispergiertes elektrisch leitenden oder halbleitenden organischen Materials die Zuführvorrichtung für dieses Material als Flüssigkeitsleitung ausgebildet ist, durch die das organische Material zu der Druckeinrichtung transportierbar ist.

32. Fertigungsmaschine nach Anspruch 31, **dadurch gekennzeichnet, dass** die Flüssigkeitsdruckeinrichtung als Sieb-, Flexo- oder Tiefdruckvorrichtung ausgebildet ist.

33. Fertigungsmaschine nach Anspruch 32, **dadurch gekennzeichnet, dass** die Flüssigkeitsdruckeinrichtung als Flüssigkeitsstrahldruckkopf ausgebildet ist.

34. Fertigungsmaschine nach Anspruch 33, **dadurch gekennzeichnet, dass** der Flüssigkeitsstrahldruckkopf eine piezoelektrische Betätigungsvorrichtung aufweist.

## Claims

1. Antifriction bearing (1, 15), provided with sensors for recording physical quantities acting on the bearing and with electronic components for evaluating and/or transmitting the sensor output signals or characteristic values derived therefrom to electrical or electronic devices located outside the bearing, and with strip conductors, the sensors, strip conductors and electronic components being arranged on at least one bearing part (2), thereby forming a measurement data recording and/or measurement data processing system, **characterized**
- **in that** the sensors, strip conductors and/or electronic components (18) are created in a polymer electronic structure built up layer by layer, the sensors, strip conductors and/or electronic components (18) being built up from at least one electrically conducting or semiconducting organic material or a precursor thereof, and
- the electrically conducting or semiconducting organic material or a precursor thereof is applied to the at least one bearing part by printing techniques and/or coating techniques from a liquid or solid phase.

2. Antifriction bearing according to Claim 1, **characterized in that** the strip conductors, electrical coils and electrical resistors consist of intrinsically conductive electrically conducting or semiconducting organic material such as doped polyacetylene, polyphenylene vinylene, polyaniline or polyethylene dioxythiophene.

3. Antifriction bearing according to Claim 1 or Claim 2, **characterized in that** the strip conductors, electrical coils and electrical resistors are formed from extrinsically conductive electrically conducting or semiconducting organic material such as graphite-filled or metal-filled polymer pastes.

4. Antifriction bearing according to Claim 1 or Claim 2, **characterized in that** field-effect transistors and/or diodes are formed with regard to their semiconductor structures for example from poly(3-alkylthiophene), α,ω-dihexylsexithiophene, alkylnaphthalene bisimide and/or fluoroalkyl-naphthalene bisimide, while a dielectric is formed from poly(methylmethacrylate), poly(vinylphenol) or polyimide.

5. Antifriction bearing according to Claim 1 or Claim 2, **characterized in that** the piezoelectrically or piezoresistively operating sensors or components are formed from polyvinylidene fluoride or from copolymers of vinylidene fluoride with trifluoroethylene.

6. Antifriction bearing according to Claim 1 or Claim 2, **characterized in that** piezoelectrically operating sensors or such electronic components comprise composites of inorganic microcrystallites in polymeric layers, lead zirconate titanate or BaTiO₃ being contained in the polymer as the piezoelectric component.

7. Antifriction bearing according to Claim 1 or Claim 2, **characterized in that** capacitors consist of intrinsically or extrinsically conducting polymer pastes and polymeric dielectrics.

8. Antifriction bearing according to at least one of the preceding claims, **characterized in that** the sensors, strip conductors and electronic components (18) are arranged on the inner bearing race (3) and/or on the outer bearing race (2).

9. Antifriction bearing according to at least one of the preceding claims, **characterized in that** the sensors, strip conductors and electronic components (18) are arranged in depressions of the inner bearing race (3) and/or of the outer bearing race (2).

10. Antifriction bearing according to at least one of the preceding claims, **characterized in that** the sensors are formed for recording the rotational speed and/or the direction of rotation of a body mounted in the bearing, the radial and axial force acting on the bearing, the direction of the force, the noise of the bearing, the temperature of the bearing and any unbalance that may occur.

11. Antifriction bearing according to at least one of the preceding claims, **characterized in that** the electronic components (18) comprise or form at least one microcomputer, which microcomputers are connected to other electronic devices and/or to the sensors via signal transmission lines, which are arranged on the bearing part (2).

12. Antifriction bearing according to at least one of the preceding claims, **characterized in that** a number of microcomputers are arranged on the bearing part (2) and connected to one another by data lines made from an electrically conducting or semiconducting organic material, via which an analog or digital data exchange can take place.

13. Antifriction bearing according to at least one of the preceding claims, **characterized in that** at least one of the sensors or electronic components (18) has a connection point, via which the sensors and/or electronic components can be connected to at least one separate display, data storage and/or data processing device located outside the bearing for passing on raw data and/or prepared information on the current physical state of the bearing and/or the part connected to the bearing.

14. Antifriction bearing according to at least one of the preceding claims, **characterized in that** the sensors, the sensor lines and data lines and the electronic components or the microcomputers have been applied to the bearing part or parts in a common production process.

15. Antifriction bearing according to at least one of the preceding claims, **characterized in that** the sensors, the sensor lines and data lines and the electronic components or the microcomputers are coated with a flexible and electrically nonconductive covering material.

16. Antifriction bearing according to at least one of the preceding claims, **characterized in that** the at least one bearing part has applied to it a logical electronic circuit comprising semiconductor structures on the basis of conventional semiconductor technology, while the further structures belonging to this circuit, made from at least one electrically conducting or semiconducting organic material, are printed onto the bearing part.

17. Antifriction bearing according to at least one of the preceding claims, **characterized in that** electrically conducting connections between strip conductors and/or electronic components arranged in different layers, which conducting connections are aligned substantially perpendicular to the longitudinal extent of the strip conductors, are formed by an electrically conducting or semiconducting organic material.

18. Antifriction bearing according to one of the preceding claims, **characterized in that** an insulating layer made from a suitable electrically insulating, preferably inorganic, material is formed between the surface of the at least one bearing part and the strip conductors, electronic components and/or sensors.

19. Antifriction bearing according to at least one of the preceding claims, **characterized in that** it has an optically operating transmitting device (15, 16), which is produced from an electrically conducting or semiconducting organic material and is suitable and intended for the transmission of sensor signals and/or quantities derived therefrom from a bearing part to a part located outside this bearing.

20. Antifriction bearing according to at least one of the preceding claims, **characterized in that** the power supply to the electronic components (18) in the antifriction bearing (15) takes place inductively by means of an excitation coil (20), located outside the bearing, and a secondary coil (19), fastened to the bearing.

21. Method for producing an antifriction bearing according to one of Claims 1 to 20, provided with sensors for recording physical quantities acting on the bearing and with electronic components for evaluating and/or transmitting the sensor output signals or characteristic values derived therefrom to electrical or electronic devices located outside the bearing, the sensors, strip conductors and electronic components being arranged on at least one bearing part, thereby forming a measurement data recording and/or measurement data processing system, **characterized**
- **in that** the sensors, strip conductors and/or electronic components are built up on the surface of at least one part of the antifriction bearing from at least one electrically conducting or semiconducting organic material or a precursor of the same, and
- the electrically conducting or semiconducting organic material or its precursor is printed onto the surface of at least one part of the antifriction bearing.

22. Method according to the preceding method claim, **characterized in that** the sensors, strip conductors and electronic components are built up on the surface of the at least one bearing part layer by layer by means of screen printing, indirect gravure printing, flexographic printing or liquid-jet printing from a liquid and an electrically conducting or semiconducting organic material dissolved or dispersed in it.

23. Method according to at least one of the preceding Method Claims 21-22, **characterized in that** the sensors, strip conductors and electronic components are created by surface-area application of the electrically conducting or semiconducting organic material or its precursor in dissolved or dispersed form onto the bearing parts and subsequent layer by layer structuring of the surface-area application by means of direct lithography or laser ablation.

24. Method according to at least one of the preceding Method Claims 21-23, **characterized in that** the sensors, strip conductors and/or electronic components are transferred from an intermediate carrier to the carrier substrate of the electronics, or directly to a bearing part, by means of a thermal transfer printing method.

25. Method according to at least one of the preceding Method Claims 21-24, **characterized in that** the sensors, strip conductors and/or electronic components are built up on the bearing part by means of the so-called laser induced thermal imaging method, in which the organic material, applied to a carrier film and in a solid state, is transferred from this carrier film in a layer having an electronic structure to the bearing part, the electronic structure built up layer by layer being created.

26. Method according to at least one of the preceding Method Claims 21-25, **characterized in that**, before the sensors, strip conductors and/or electronic components are formed or applied, an insulating layer made from organic or preferably inorganic material is applied on the surface of the at least one bearing part.

27. Method according to at least one of the preceding Method Claims 21-26, **characterized in that** the at least one bearing part has applied to it a logical electronic circuit comprising semiconductor structures on the basis of conventional semiconductor technology, while the further electronic structures belonging to this circuit, made from an electrically conducting or semiconducting organic material, are printed onto the bearing part.

28. Method according to at least one of the preceding Method Claims 21-27, **characterized in that** the electronic circuit and/or individual sensors made from electrically conducting or semiconducting organic material or its precursor are first applied to a flexible film, subsequently singulated and finally fastened in a predetermined configuration on the at least one bearing part and electrically connected to one another.

29. Method according to at least one of the preceding Method Claims 21-28, **characterized in that** the sensors, strip conductors and/or electronic components that are arranged in more than one layer with an insulator interposed are electrically connected to one another by an electrically conducting or semiconducting organic material, this electrically conducting or semiconducting organic material being aligned substantially perpendicular to the longitudinal extent of the strip conductors or the electronic components.

30. Production machine for forming sensors, strip conductors and/or electronic components from at least one electrically conducting or semiconducting organic material on an antifriction bearing, for the implementation of the method according to one of Claims 21 to 29, **characterized by** a chucking device for receiving that part (2) of the antifriction bearing to which the polymer electronics (18) are to be applied, at least one feeding device for the feeding of at least one electrically conducting or semiconducting organic material or a precursor thereof, and at least one printing device, which is connected to the feeding device for feeding the organic material and makes it possible for the at least one organic material or a precursor thereof to be applied to the part (2) of the antifriction bearing layer by layer.

31. Production machine according to Claim 30, **characterized in that**, if an electrically conducting or semiconducting organic material dissolved or dispersed in a liquid is used, the feeding device for the material is formed as a liquid line, through which the organic material can be transported to the printing device.

32. Production machine according to Claim 31, **characterized in that** the liquid printing device is formed as a screen printing, flexographic printing or gravure printing device.

33. Production machine according to Claim 32, **characterized in that** the liquid printing device is formed as a liquid-jet printing head.

34. Production machine according to Claim 33, **characterized in that** the liquid-jet printing head has a piezoelectric actuating device.

## Revendications

1. Palier de roulement (1, 15) présentant
des sondes de saisie de grandeurs physiques qui agissent sur le palier ainsi que de composants électroniques qui évaluent et/ou transfèrent les signaux de sortie des sondes ou de valeurs caractéristiques qui en sont déduites à des appareils électriques ou électroniques situés à l'extérieur du palier,
des pistes conductrices,
les sondes, les pistes conductrices et les composants électroniques qui forment un système de saisie de données de mesure et/ou de traitement de données de mesure étant disposés sur au moins un composant (2) du palier,
**caractérisé en ce que**
les sondes, les pistes conductrices et/ou les composants électroniques (18) sont configurés en structure électronique polymère stratifiée, les sondes, les pistes conductrices et/ou les composants électroniques (18) étant constitués d'au moins un matériau organique électroniquement conducteur ou semi-conducteur ou d'un précurseur de ce dernier et
**en ce que** le matériau organique électriquement conducteur ou semi-conducteur ou un précurseur de ce dernier sont appliqués par des techniques d'impression et/ou de revêtement sur le ou les composants du palier à partir d'une phase liquide ou solide.

2. Palier de roulement selon la revendication 1, **caractérisé en ce que** les pistes conductrices, des bobines électriques et des résistances électriques sont constitués d'un matériau organique intrinsèquement électriquement conducteur ou semi-conducteur, par exemple un polyacétylène dopé, un poly(phénylène-vinylène), une polyaniline ou un poly(éthylène-dioxythiophène).

3. Palier de roulement selon la revendication 1 ou la revendication 2, **caractérisé en ce que** les pistes conductrices, les bobines électriques et les résistances électriques sont formés d'un matériau organique extrinsèquement électriquement conducteur ou semi-conducteur, par exemple une pâte polymère chargée de graphite ou de métal.

4. Palier de roulement selon la revendication 1 ou la revendication 2, **caractérisé en ce que** les transistors à effet de champ et/ou les diodes ont une structure semi-conductrice de poly(3-alkylthiophène), d'α,ω-dihexylsexithiophène, d'alkyl-naphtalinebisimide ou de fluoroalkyl-naphtalinebisimide, tandis qu'un diélectrique est formé de poly(méthacrylate de méthyle), de poly(vinylphénol) ou de polyimide.

5. Palier de roulement selon la revendication 1 ou la revendication 2, **caractérisé en ce que** les sondes ou composants à action piézoélectrique ou piézorésistive sont formés de poly(fluorure de vinylidène) ou de copolymère de fluorure de vinylidène et de trifluoroéthylène.

6. Palier de roulement selon la revendication 1 ou la revendication 2, **caractérisé en ce que** les sondes à action piézoélectrique ou des composants électroniques de même type sont constitués de composites de microcristalites minéraux disposés dans des couches polymères, du zirconate-titanate de plomb ou du BaTiO₃ étant prévus dans le polymère comme composants piézoélectriques.

7. Palier de roulement selon la revendication 1 ou la revendication 2, **caractérisé en ce que** les condensateurs sont constitués de pâtes polymères intrinsèquement ou extrinsèquement conductrices ainsi que de diélectriques polymères.

8. Palier de roulement selon au moins l'une des revendications précédentes, **caractérisé en ce que** les sondes, les pistes conductrices et les composants électroniques (18) sont disposés sur la bague intérieure (3) du palier et/ou sur la bague extérieure (2) du palier.

9. Palier de roulement selon au moins l'une des revendications précédentes, **caractérisé en ce que** les sondes, les pistes conductrices et les composants électroniques (18) sont disposés dans des creux de la bague intérieure (3) du palier et/ou de la bague extérieure (2) du palier.

10. Palier de roulement selon au moins l'une des revendications précédentes, **caractérisé en ce que** les sondes sont configurées pour saisir la vitesse de rotation et/ou le sens de rotation d'un corps monté dans le palier, la force radiale ou la force axiale qui agit sur le palier, l'orientation de la force, le bruit du palier, la température du palier ou un balourd éventuellement présent.

11. Palier de roulement selon au moins l'une des revendications précédentes, **caractérisé en ce que** les composants électroniques (18) comprennent ou forment au moins un microordinateur relié à d'autres modules électroniques et/ou aux sondes par des conducteurs de transmission de signaux disposés sur le composant (2) du palier.

12. Palier de roulement selon au moins l'une des revendications précédentes, **caractérisé en ce que** plusieurs microordinateurs sont disposés sur le composant (2) du palier et sont reliés les uns aux autres par des conducteurs de données en un matériau organique électriquement conducteur ou semi-conducteur qui permettent un échange de données analogiques ou numériques.

13. Palier de roulement selon au moins l'une des revendications précédentes, **caractérisé en ce qu'**au moins l'une des sondes ou l'un des composants électroniques (18) disposent d'un emplacement de raccordement par lequel les sondes et/ou les composants électroniques peuvent être reliés pour transmettre des données brutes et/ou des informations traitées concernant l'état physique instantané du palier et/ou du composant relié au palier à au moins un dispositif séparé, situé à l'extérieur du palier, d'affichage, de mémoire et/ou de traitement de données.

14. Palier de roulement selon au moins l'une des revendications précédentes, **caractérisé en ce que** les sondes, les conducteurs de sondes et les conducteurs de données ainsi que les composants électroniques et les microordinateurs sont appliqués sur le ou les composants du palier par une opération de fabrication conjointe.

15. Palier de roulement selon au moins l'une des revendications précédentes, **caractérisé en ce que** les sondes, les conducteurs de sondes et les conducteurs de données ainsi que les composants électroniques et les microordinateurs sont revêtus d'un matériau de recouvrement souple et électriquement non conducteur.

16. Palier de roulement selon au moins l'une des revendications précédentes, **caractérisé en ce qu'**un circuit électronique logique constitué de structures semi-conductrices réalisées par une technique classique de semi-conducteurs est appliqué sur le ou les composants du palier tandis que les autres structures qui appartiennent à ce circuit sont constituées d'au moins un matériau organique électriquement conducteur ou semi-conducteur imprimé sur le composant du palier.

17. Palier de roulement selon au moins l'une des revendications précédentes, **caractérisé en ce que** les liaisons électriquement conductrices entre des pistes conductrices et/ou des composants électroniques disposés dans des couches différentes sont formées d'un matériau organique électriquement conducteur ou semi-conducteur, les liaisons conductrices étant orientées essentiellement perpendiculairement à l'extension longitudinale des pistes conductrices.

18. Palier de roulement selon au moins l'une des revendications précédentes, **caractérisé en ce qu'**une couche isolante en un matériau électriquement isolant approprié, de préférence un matériau minéral, est formée entre la surface du ou des composants du palier et les pistes conductrices, les composants électroniques et/ou les sondes.

19. Palier de roulement selon au moins l'une des revendications précédentes, **caractérisé en ce qu'**il présente un dispositif d'émission (15, 16) agissant optiquement qui est formé d'un matériau organique électriquement conducteur ou semi-conducteur et qui convient et est prévu pour transmettre d'un composant du palier à un composant situé à l'extérieur de ce palier des signaux des sondes et/ou des grandeurs qui en sont déduites.

20. Palier de roulement selon au moins l'une des revendications précédentes, **caractérisé en ce que** l'alimentation en énergie des composants électroniques (18) prévus dans le palier de roulement (15) s'effectue par induction au moyen d'une bobine excitatrice (20) située à l'extérieur du palier et d'une bobine secondaire (19) fixée sur le palier.

21. Procédé de fabrication d'un palier de roulement selon l'une des revendications 1 à 20 présentant
des sondes de saisie de grandeurs physiques qui agissent sur le palier ainsi que de composants électroniques qui évaluent et/ou transfèrent les signaux de sortie des sondes ou de valeurs caractéristiques qui en sont déduites à des appareils électriques ou électroniques situés à l'extérieur du palier,
les sondes, les pistes conductrices et les composants électroniques qui forment un système de saisie de données de mesure et/ou de traitement de données de mesure étant disposés sur au moins un composant du palier,
**caractérisé en ce que**
les sondes, les pistes conductrices et/ou les composants électroniques sont constitués d'au moins un matériau organique électriquement conducteur ou semi-conducteur ou d'un précurseur de ce dernier sur la surface d'au moins un composant du palier de roulement et
**en ce que** le matériau organique électriquement conducteur ou semi-conducteur ou son précurseur sont imprimés sur la surface du ou des composants du palier de roulement.

22. Procédé selon la revendication de procédé qui précède, **caractérisé en ce que** les sondes, les pistes conductrices et les composants électroniques sont réalisés par couches successives par sérigraphie, héliogravure, flexographie ou impression par jet de liquide d'un liquide et d'un matériau organique électriquement conducteur ou semi-conducteur qui y est dissous ou dispersé ou de son précurseur sur la surface du ou des composants du palier.

23. Procédé selon au moins l'une des revendications de procédé 21 et 22 qui précèdent, **caractérisé en ce que** les sondes, les pistes conductrices et les composants électroniques sont formés par application à plat du matériau organique électriquement conducteur ou semi-conducteur ou de son précurseur sous forme dissoute ou dispersée sur les composants du palier et ensuite structuration couche par couche de l'application à plat, par lithographie directe ou ablation au laser.

24. Procédé selon au moins l'une des revendications de procédé 21 à 23 qui précèdent, **caractérisé en ce que** les sondes, les pistes conductrices et/ou les composants électroniques sont transférés par un procédé d'impression par transfert thermique depuis un support intermédiaire jusque sur le substrat de support de l'électronique, ou directement sur un composant du palier.

25. Procédé selon au moins l'une des revendications de procédé 21 à 24 qui précèdent, **caractérisé en ce que** les sondes, les pistes conductrices et/ou les composants électroniques sont formés sur le composant du palier par le procédé dit d'imagerie thermique induite par laser, dans lequel le matériau organique est appliqué sur une feuille de support et est transféré à l'état solide de cette feuille de support jusque sur le composant du palier en une couche qui présente une structure électronique, la structure électronique stratifiée étant ainsi formée.

26. Procédé selon au moins l'une des revendications de procédé 21 à 25 qui précèdent, **caractérisé en ce qu'**avant la formation et/ou l'application des sondes, des pistes conductrices et/ou des composants électroniques sur la surface du ou des composants du palier, une couche isolante en un matériau organique ou de préférence minéral est appliquée.

27. Procédé selon au moins l'une des revendications de procédé 21 à 26 qui précèdent, **caractérisé en ce qu'**un circuit électronique logique constitué de structures semi-conductrices réalisé par une technique classique de semi-conducteurs est appliqué sur le ou les composants du palier tandis que les autres structures électroniques qui font partie de ce circuit sont imprimées sur le composant du palier à partir d'un matériau organique électriquement conducteur ou semi-conducteur.

28. Procédé selon au moins l'une des revendications de procédé 21 à 27 qui précèdent, **caractérisé en ce que** le circuit électronique et/ou certaines sondes en matériau organique électriquement conducteur ou semi-conducteur ou leurs précurseurs sont d'abord appliqués sur un film flexible, sont ensuite découpés et enfin fixés dans une configuration prédéterminée sur le ou les composants du palier et reliés électriquement les uns aux autres.

29. Procédé selon au moins l'une des revendications de procédé 21 à 28 qui précèdent, **caractérisé en ce que** les sondes, les pistes conductrices et/ou les composants électroniques qui sont disposés en plusieurs couches séparées par des couches intermédiaires sont reliés électriquement les uns aux autres par un matériau organique électriquement conducteur ou semi-conducteur, ce matériau organique électriquement conducteur ou semi-conducteur étant orienté essentiellement perpendiculairement à l'extension longitudinale des pistes conductrices ou des composants électroniques.

30. Machine de fabrication destinée à former des sondes, des pistes conductrices et/ou des composants électroniques en au moins un matériau organique électriquement conducteur ou semi-conducteur sur un palier de roulement, en vue d'exécuter le procédé selon l'une des revendications 21 à 29,
**caractérisée par**
un dispositif de serrage qui reprend le composant (2) du palier de roulement sur lequel l'électronique polymère (18) doit être appliquée,
au moins un dispositif d'amenée qui amène au moins un matériau organique électriquement conducteur ou semi-conducteur ou un précurseur de ce dernier et au moins un dispositif d'impression relié au dispositif d'amenée qui amène le matériau organique et qui permet d'appliquer couche par couche le ou les matériaux organiques ou leurs précurseurs sur le composant (2) du palier de roulement.

31. Machine de fabrication selon la revendication 30, **caractérisée en ce que** lorsqu'elle utilise un matériau organique électriquement conducteur ou semi-conducteur dissous ou dispersé dans un liquide, le dispositif d'amenée de ce matériau est configuré comme conduit de liquide par lequel le matériau organique peut être transporté jusqu'au dispositif d'impression.

32. Machine de fabrication selon la revendication 31, **caractérisée en ce que** le dispositif d'impression de liquide est configuré comme dispositif de sérigraphie, de flexographie ou d'héliogravure.

33. Machine de fabrication selon la revendication 32, **caractérisée en ce que** le dispositif d'impression de liquide est configuré comme tête d'impression à jet de liquide.

34. Machine de fabrication selon la revendication 33, **caractérisée en ce que** la tête d'impression à jet de liquide présente un dispositif piézoélectrique d'actionnement.
